# EUROPEAN PATENT APPLICATION

(11) **EP 4 823 139 A1**
(43) Date of publication of application: **14.10.2026**
(21) Application number: 24927738.5
(22) Date of filing: 04.03.2024
(51) Int. Cl.: H04W 8/24

(54) **INFORMATION TRANSMISSION METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: DING, Yi, Dongguan, Guangdong 523860 (CN); LIN, Xue, Dongguan, Guangdong 523860 (CN)
(74) Representative: Taor, Simon Edward William
(86) International application number: PCT/CN2024/079980
(87) International publication number: WO 2025/184786

(57) **Abstract**

An information transmission method and apparatus, a device, and a storage medium, relating to the technical field of communications. The method comprises: a communication device receives K pieces of first information, the first information comprising identification information of a first terminal device, and K being an integer greater than or equal to 1 (810); and the communication device sends second information, the second information being determined on the basis of the K pieces of first information (820). According to the method, upon receiving K pieces of first information sent by K first terminal devices, a communication device determines second information on the basis of the K pieces of first information and sends same, and when K is greater than 1, the communication device can confirm identification information reported by a plurality of first terminal devices at one time, thereby preventing the first terminal devices from repeatedly reporting the identification information.

## Description

### TECHNICAL FIELD

The embodiments of the present disclosure relate to the field of communication technology, and in particular to an information transmission method and device, a device, and a storage medium.

### BACKGROUND

In recent years, the zero-power devices are applied extensively. The zero-power Internet of Things (IoT) may also be called Ambient power enabled IoT (Ambient IoT). The Ambient IoT device means an IoT device driven using various environmental energies (such as radio frequency energy, light energy, solar energy, thermal energy, mechanical energy, etc.).

The information transmission process between the A-IoT devices and base stations or intermediate nodes should be further research.

### SUMMARY

The embodiments of the present disclosure provide an information transmission method, an information transmission device, a device, and a storage medium. The technical solution provided by the embodiments of the present disclosure are described as follows:

An aspect of the embodiments of the present disclosure provides an information transmission method performed by a communication device, the method includes following operations.

K pieces of first information are received. The first information includes identification information of the first terminal device, and K is an integer greater than or equal to 1.

Second information is sent. The second information is determined from the K pieces of first information.

An aspect of the embodiments of the present disclosure provides an information transmission method executed by a first terminal device, the method includes following operations.

First information is sent, and the first information includes identification information of the first terminal device.

Second information is received, and the second information is determined from K pieces of first information, K is an integer greater than or equal to 1.

An aspect of the embodiments of the present disclosure provides an information transmission device, which includes a receiving module and a sending module.

The receiving module is configured to receive K pieces of first information. The first information includes identification information of a first terminal device, and K is an integer greater than or equal to 1.

The sending module is configured to send second information, and the second information is determined according to the K pieces of first information.

An aspect of the embodiments of the present disclosure provides an information transmission device, which includes a sending module and a receiving module.

The sending module is configured to send first information, and the first information includes identification information of a first terminal device.

The receiving module is configured to receive second information, and the second information is determined according to K pieces of first information, and K is an integer greater than or equal to 1.

An aspect of the embodiments of the present disclosure provides a communication device including a processor and a memory. A computer program is stored in the memory, and the processor executes the computer program to implement the information transmission method.

An aspect of the embodiments of the present disclosure provides a terminal device including a processor and a memory. A computer program is stored in the memory, and the processor executes the computer program to implement the information transmission method.

An aspect of the embodiments of the present disclosure provides a computer-readable storage medium in which a computer program is stored, and the computer program is executed by a processor to implement the above information transmission method at the communication device or the first terminal device.

An aspect of the embodiments of the present disclosure provides a chip including a programmable logic circuit and/or program instructions. When the chip is run, the information transmission method at the communication device or the first terminal device is implemented.

An aspect of the embodiments of the present disclosure provides a computer program product including computer instructions stored in a computer-readable storage medium, and a processor reads and executes the computer instructions from the computer-readable storage medium to implement the above information transmission method at the communication device or the first terminal device.

The technical solution provided by the embodiments of the present disclosure may include the following beneficial effects.

After receiving the K pieces of first information transmitted by the K first terminal devices, the communication device determines the second information according to the K pieces of first information and transmits the second informaiton, and when the K is greater than 1, the communication device can confirm the identification information reported by the plurality of first terminal devices at one time, thereby avoiding the first terminal device from repeatedly reporting the identification information.

### BRIEF DESCRIPTION OF THE DRAWINGS

FIG. 1 is a schematic diagram of a network architecture provided by an embodiment of the present disclosure;
FIG. 2 is a schematic diagram of a basic configuration of a zero-power communication system according to an embodiment of the present disclosure;
FIG. 3 is a schematic diagram of a radio frequency energy harvesting principle provided by an embodiment of the present disclosure;
FIG. 4 is a schematic diagram of a backscatter communication principle provided by an embodiment of the present disclosure;
FIG. 5 is a schematic structural diagram of a resistive load modulation circuit according to an embodiment of the present disclosure;
FIG. 6 is a schematic diagram of two A-IoT deployment scenarios provided by one embodiment of the present disclosure;
FIG. 7 is a schematic diagram of a random access procedure provided by an embodiment of the present disclosure;
FIG. 8 is a flowchart of an information transmission method according to an embodiment of the present disclosure;
FIG. 9 is a schematic diagram of an information transmission process provided by an embodiment of the present disclosure;
FIG. 10 is a schematic diagram of an information transmission process provided by another embodiment of the present disclosure;
FIG. 11 is a schematic diagram of an information transmission process provided by another embodiment of the present disclosure;
FIG. 12 is a block diagram of an information transmission device according to an embodiment of the present disclosure;
FIG. 13 is a block diagram of an information transmission device according to another embodiment of the present disclosure; and
FIG. 14 is a schematic structural diagram of a communication device according to an embodiment of the present disclosure.

### DETAILED DESCRIPTION

In order to make the object, technical solutions, and advantages of the present disclosure more clear, the embodiments of the present disclosure will be described in further detail below with reference to the accompanying drawings.

The network architecture and the business scenario described in the embodiment of the present disclosure are for the purpose of explaining the technical solution of the embodiment of the present disclosure more clearly, and do not constitute a limitation of the technical solution provided by the embodiment of the present disclosure. As can be seen by those with ordinary skill in the art, with the evolution of the network architecture and the emergence of new business scenarios, the technical solution provided by the embodiment of the present disclosure is all applicable to similar technical problems.

The technical solutions of the embodiment of the present disclosure can be applied to various communication systems, for example, the Global System of Mobile communication (GSM) System, the Code Division Multiple Access (CDMA) System, the Wideband Code Division Multiple Access (WCDMA) System, the General Packet Radio Service (GPRS), the Long Term Evolution (LET) system, the Advanced Long Term Evolution (LET-A) system, the New Radio (NR) system, the Evolved system of the NR system, the LET-based access to unlicensed spectrum (LET-U) system, the NR-based access to unlicensed spectrum (NR-U) System, the Non-Terrestrial Networks (NTN) System, the Universal Mobile Telecommunication System (UMTS), the Wireless Local Area Networks (WLAN), the Wireless Fidelity (WiFi), the 5th-Generation (5G) system, the Beyound 5G (B5G) system, the 6th-Generation (6G) system, or other communication systems, etc.

Generally speaking, the conventional Communication system supports a limited number of connections and is easy to implement, however, with the development of Communication technology, the mobile Communication system will not only support conventional Communication, but also support, for example, the device-to-device (D2D) Communication, the machine-to-machine (M2M) Communication, the Machine Type Communication (MTC), the vehicle-to-vehicle (V2V) Communication, or the vehicle-to-everything (V2X) Communication, and the like, and embodiments of the present disclosure can also be applied to these Communication systems.

The communication system in the embodiment of the present disclosure can be applied to a Carrier Aggregation (CA) scenario, a Dual Connectivity (DC) scenario, and a Standalone (SA) network layout scenario.

The communication system in the embodiment of the present disclosure can be applied to an unlicensed spectrum. The unlicensed spectrum can also be considered as a shared spectrum. Alternatively, the communication system in the embodiment of the present disclosure may also be applied to a licensed spectrum, and the licensed spectrum may also be considered as a non-shared spectrum.

The embodiments of the present disclosure can be applied to the Non-Terrestrial Networks (NTN) systems, and can also be applied to the Terrestrial Networks (TN) systems. Among them, the NTN generally provides communication services to ground users by using satellite communication. The NTN systems currently include the NR-NTN and the IoT-NTN systems, and may also include other NTN systems.

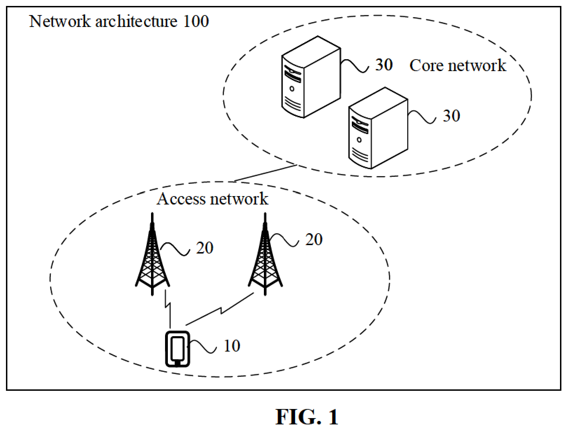

Referring to FIG. 1, which is a schematic diagram of a network architecture 100 provided by an embodiment of the present disclosure, the network architecture 100 may include a terminal device 10, an access network device 20 and a core network element 30.

The terminal device 10 may refer to a UE (User Equipment), an access terminal, a subscriber unit, a subscriber station, a mobile station, a mobile station, a remote station, a remote terminal, a mobile device, a wireless communication device, a User agent, or a User device. In some embodiments, the terminal device 10 may also be a cellular telephone, a cordless telephone, a Session Initiation Protocol (SIP) telephone, a Wireless Local Loop (WLL) station, a Personal Digital Assistant (PDA), a handheld device having a Wireless communication function, a computing device, or other processing device connected to a Wireless modem, a vehicle-mounted device, a wearable device, a terminal device in the 5th Generation System (5GS), or a terminal device in a future evolution Public Land Mobile Network (PLMN), and the like, which is not limited in the embodiments of the present disclosure. For convenience of description, the above-mentioned devices are collectively referred to as terminal devices. The number of terminal devices 10 is more than one, and one or more terminal devices 10 may be distributed in a cell managed by each access network device 20. The terminal device may also be simply referred to as a terminal or a UE, and the meaning thereof can be understood by those skilled in the art.

The access network device 20 is a device deployed in an access network for providing wireless communication functions for the terminal device 10. The access network device 20 may include various forms of macro base stations, micro base stations, relay stations, access points, and the like. In the system employing different wireless access technologies, the names of the devices having functions of the access network device may vary, for example, in 5G NR systems, the devices are referred to as gNodeB or gNB. As evolution of the communication technologies, the name "access network device" may change. For convenience of description, in the embodiment of the present disclosure, the above-described device for providing a wireless communication function for the terminal device 10 is collectively referred to as an access network device. In some embodiments, a communication relationship may be established between the terminal device 10 and the core network element 30 through the access network device 20. Exemplarily, in the Long Term Evolution (LTE) system, the Access Network device 20 may be the Evolved Universal Terrestrial Radio Access Network (EUTRAN) or one or more eNodeBs in the EUTRAN. In the 5G NR system, the Access Network device 20 may be a Radio Access Network (RAN) or one or more gNBs in the RAN. In the embodiment of the present disclosure, the "network device" refers to an access network device 20, such as a base station, unless otherwise specified.

The core network element 30 is a network element deployed in the core network. The functions of the core network element 30 are mainly to provide user connection, user management and service bearing, and as a bearer network, provides an interface to the external network. For example, the core network element in the 5G NR system may include network elements such as an Access and Mobility Management Function (AMF) entity, a User Plane Function (UPF) entity, and a Session Management Function (SMF) entity.

In some embodiments, the access network device 20 and the core network element 30 communicate with each other through some air interface technology, such as the NG interface in a 5G NR system. The access network device 20 and the terminal device 10 communicate with each other through some air interface technology, such as a Uu interface.

The "5G NR system" in the embodiment of the present disclosure may also be referred to as a 5G system or an NR system, but those skilled in the art can understand the meaning thereof. The technical solution described in the embodiment of the present dsiclosure may be applicable to the LTE System, a 5G NR System, a subsequent evolution System (for example, a Beyound 5G (B5G) System, a 6th Generation System (6G System)) of the 5G NR System, or other communication systems such as a Narrow Band Internet of Things (NB-IoT) System, which is not limited in the present disclosure.

In the embodiment of the present disclosure, the network device can provide services for the cell, and the terminal device communicates with the network device through transmission resources (for example, frequency domain resources, or frequency spectrum resources) on carriers used by the cell. The cell may be a cell corresponding to the network device (for example, a base station), and the cell may belong to a macro base station or a base station corresponding to a Small cell. The Small cell here may include: a Metro cell, a Micro cell, a Pico cell, a Femto cell, and the like. These Small cells have the characteristics of Small coverage and low transmission power, and are suitable for providing high-speed data transmission services.

Before introducing the technical solution of the present disclosure, the related techniques involved in the present disclosure will be described. The following related technologies can be, as optional schemes, arbitrarily combined with the technical solutions of the embodiments of the present disclosure, and all of them belong to the protection scope of the embodiments of the present as optional schemes. The embodiments of the present disclosure include at least some of the following.

### 1. Principle of zero power communication technology

In recent years, the zero-power devices are extensively applied. The Zero-power Internet of Things may also be called Ambient power enabled IoT (referred as Ambient IoT for short), and may also be called passive IoT in some technical literatures. The Ambient IoT device means an IoT device driven using various environmental energies (such as radio frequency energy, light energy, solar energy, thermal energy, mechanical energy, etc.). The device may have no energy storage capacity or very limited energy storage capacity (e.g. using tens of uF capacitors). Compared with the existing IoT devices, the Ambient IoT devices have many advantages such as no conventional battery, maintenance-free, small size, low complexity, low cost, and long life cycle.

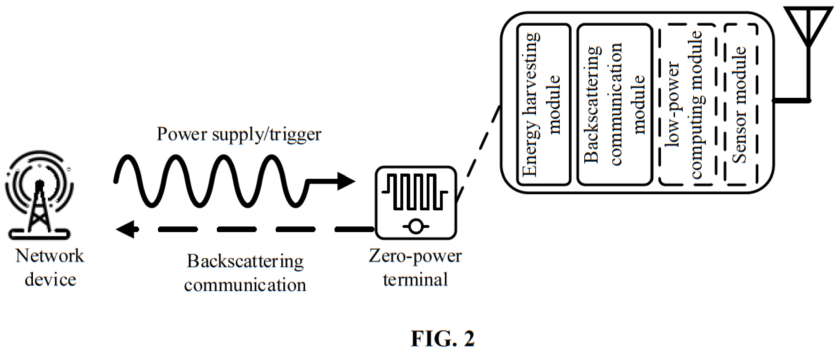

The zero-power communication uses energy harvesting and backscattering communication technology. The zero-power communication network consists of a network device and a zero-power device, as shown in Figure 2. The network device is configured to transmit a wireless power supply signal and a downlink communication signal to the zero-power device and receive a backscatter signal of the zero-power device. The zero-power device includes an energy harvesting module, a backscattering communication module, and a low power computing module. In addition, the zero-power device may also include a memory or a sensor for storing some basic information (such as an article identification, etc.) or acquiring sensing data such as ambient temperature and ambient humidity.

The key technologies of zero power communication mainly include radio frequency energy harvesting and backscattering communication.

### 1.1. RF Power Harvesting

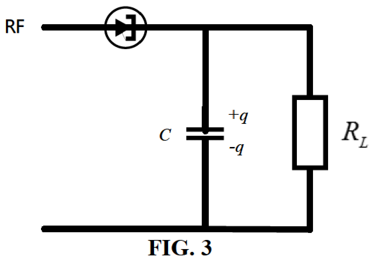

As shown in Figure 3, the radio frequency energy harvesting module is configured to harvest space electromagnetic wave energy based on the electromagnetic induction principle, and acquire the energy for driving operation of the zero-power deevice, such as driving the low-power demodulation and modulation module, the sensor and the memory reading. Therefore, the zero-power device does not need the traditional batteries.

### 1.2. Back Scattering Communication

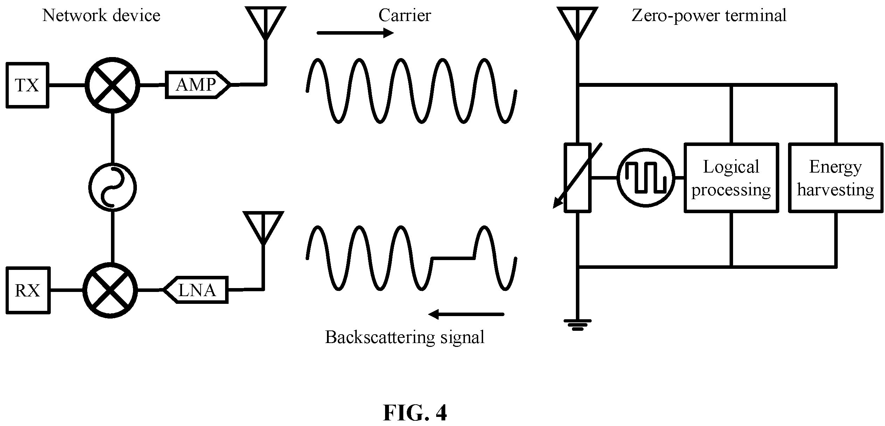

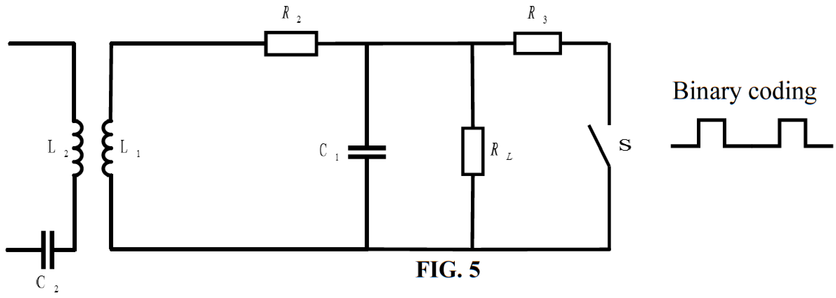

As shown in FIG. 4, the zero-power communication terminal receives the wireless signal sent by the network, modulates the wireless signal, loads the information to be sent and radiates the modulated signal from the antenna. The above information transmission process is called backscattering communication. Backscattering and load modulation functions are inseparable. In the load modulation, the circuit parameters of the oscillation loop of the zero-power device are adjusted and controlled according to the beat of a data stream, and a value of a parameter such as the impedance of the electronic tag change accordingly, for implementing modulation. The load modulation technology mainly includes resistance load modulation and capacitance load modulation. In the resistance load modulation, the load is connected in parallel with a resistor that is turned on or off based on the control of the binary data stream, as shown in Figure 5 below. The on-off of resistor may lead to the change of circuit voltage, to implement Amplitude Shift Keying (ASK) modulation. That is, signal modulation and transmission of the signal are realized by adjusting the amplitude of a backscattering signal of the zero-power device. Similarly, in the capacitance load modulation, the resonance frequency of the circuit can be changed by turning on and off the capacitor, to implement Frequency Shift Keying (FSK) modulation. That is, signal modulation and transmission can be realized by adjusting the operating Frequency of the backscattering signal of the zero-power device.

It can be seen that the the zero-power device performs information modulation on the incoming wave signal by means of load modulation, to implement the backscattering communication process. Therefore, the zero-power device has following significant advantages:
(1) The terminal does not actively transmit signals, and thus does not need complicated RF links, such as a power amplifier (PA), a radio filter (RF), etc.;
(2) The terminal does not actively generate high-frequency signals, and thus does not need high-frequency crystal oscillators;
(3) With the help of backscattering communication, the terminal signal transmission does not consume the terminal's own energy.

### 1.3. Application Scenarios of Zero Power Communication

Due to its remarkable advantages such as extremely low cost, zero power and small size, the zero-power communication may be widely applied in a wide range of sectors such as logistics for vertical industries, intelligent warehousing, intelligent agriculture, energy and power, industrial Internet, etc, and may also be applied to personal applications such as smart wearable and smart home.

### 1.4. Classification of the zero-power devices

The zero-power devices may be classified into the following types based on energy sources and usage methods thereof: a passive zero-power device, a semi-passive zero-power device, an active zero-power device.

### (1) Passive zero-power device

The zero-power device does not need a built-in battery, and when the zero-power device is close to the network device (such as the reader/writer of the Radio Frequency Identification (RFID) system), the zero-power device is in the near-field range formed by radiation of the antenna of the network device. Therefore, the antenna of the zero-power device generates an induced current through electromagnetic induction, and the induced current drives the low power chip circuit of the zero-power device. Demodulation of a forward link signal (downlink, a link from the network device to the zero-power device) and signal modulation of a backward link (uplink, a link from the zero-power device to the network device) are implemented. For the backscattering link, the zero-power device transmits signals using backscattering implementation.

It can be seen that the passive zero-power device does not need a built-in battery for driving in either the forward link or the backward link, and is a real zero-power device.

The passive zero-power device does not need the battery, and the RF circuit and the baseband circuit are very simple. For example, the Low Noise Amplifier (LNA), the PA, the crystal oscillator, Analog-to-Digital Converter (ADC) and other devices are not required in the passive zero-power device, and the passive zero-power device have many advantages such as small size, light weight, low price and long service life.

### (2) Semi-passive zero-power device

The semi-passive zero-power device is not equipped with a conventional battery, but can use the radio frequency (RF) energy acquisition module for acquiring Radio wave energy, or use solar energy, light energy, heat energy and kinetic energy acquisition module for acquiring energy, and stores the acquired energy in an energy storage unit (such as a capacitor). After the energy storage unit acquires energy, the low-power chip circuit of the zero-power device can be driven, for implementing the signal demodulation of the forward link and the signal modulation of the backward link. For the backscattering link, the zero-power device transmits signals using backscattering implementations.

It can be seen that the semi-passive zero-power device does not need a built-in battery for driving in either the forward link or the backward link. Although the energy stored by capacitor is used in operation, the energy comes from the radio energy collected by the energy acquisition module, and the semi-passive zero-power device is a real zero-power device.

The semi-passive zero-power device inherits many advantages of the passive zero power device, and thus has many advantages such as small size, light weight, low price and long service life.

### (3) Active zero power device

The zero-power devices used in some scenarios can also be the active zero-power device, and such devcie can have a built-in battery (a conventional battery, such as a dry battery, a rechargeable lithium battery, etc.). The battery is used to drive a low-power chip circuit of the zero-power device. The signal demodulation of the forward link and the signal modulation of the backward link are implemented. However, for the backscattering links, the zero-power device implements signal transmission by using backscattering implementation. Therefore, the zero power of such terminal is mainly reflected in the fact that the signal transmission of backward link uses the way of backscattering rather than the terminal's own power. Although the battery is used in the active zero-power device, the power consumption is very low due to the sampling ultra-low power communication technology. Thus, the operation life of the battery can be greatly improved compared with the prior art.

The built-in battery of the active zero-power device supplies power the RFID chip to increase the read and write distance of the tag and improve the reliability of communication. Therefore, the active zero-power device can be applied in some scenarios that require relatively high requirements for a communication distance and a reading delay.

Classification of zero-power devices based on transmitter type.

As we all know, the service types of the zero-power Internet of Things, like service types of other Internet of Things, are primarily based on uplink services. Therefore, according to the way in which the zero-power terminal sends data, the zero-power devices can be classified into the following types: a backscatter-based zero-power device, an active transmitter-based zero-power device, a zero-power device with both backscatter and an active transmitter.

### (1) Backscatter-based zero-power device

Such backscatter-based zero-power device transmits uplink data using a backscattering method as described above. Such device does not have an active transmitter for actively transmitting, but only has a backscatter transmitter. Therefore, when such device performs data transmission, a carrier wave is provided by a network device, and such device performs backscattering based on the carrier wave to implement data transmission.

### (2) Active Transmitter-Based Zero Power Device

The active transmitter-based zero-power device transmits uplink data by using an active transmitter having active transmitting capability. Thus, such zero-power device can transmit data by using the active transmitter thereof without a carrier provided by the network device. The active transmitter suitable for the zero-power device may be, for example, an ultra-low-power ASK, an ultra-low-power FSK transmitter, etc. Based on the current implementation, the overall power consumption of such transmitter can be reduced to 400-600uw when transmitting a signal of 100uw.

### (3) Zero-power device with both backscatter and active transmitter

Such terminal can support both backscattering and the active transmitter. The terminal may determine, according to different circumstances (e.g., electricity conditions, available environmental energy sources), or based on the scheduling of the network device, to use which uplink signal transmission mode: whether to use a backscatter mode or an active transmitter for active transmission.

### 2. Cellular passive IoT

The cellular IoT is booming. For example, the 3GPP (3rd Generation Partnership Project) has standardized Narrow Band Internet of Things (NB-IoT), Machine Type Communication (MTC), and Reduced Capability (RedCap), and other IoT technologies. However, the IoT Communication requirements cannot be met by existing technologies in some scenarioes, such as: a harsh communication environment, a terminal morphology requirement of extremely small size, and a very low-cost IoT communication requirement.

### (1) Harsh communication environment

Some IoT scenarios may face extreme environments such as high temperature, extremely low temperature, high humidity, high pressure, high radiation or high-speed movement environments. Such as ultra-high voltage substation, high-speed train track monitoring, environmental monitoring in the alpine zone, the industrial production line, etc. In these scenarios, the existing IoT terminals cannot work due to the operation environment limitations of conventional power supplies. In addition, extreme operation environments are also detrimental to IoT maintenance, such as replacing batteries.

### (2) Terminal morphology requirement of extremely small size

Some IoT communication scenarios, such as food traceability, commodity circulation, and smart wearable, require terminals to be extremely small in size for facilitating use in these scenarios. For example, the IoT terminals for commodity management in the circulation link, as the form of electronic labels, are usually embedded in the commodity packaging in a very small form. For another example, the lightweight wearable devices can improve user experience while meeting user needs.

### (3) Very low-cost IoT communication requirements

Numerous IoT communication scenarios require the low cost of the IoT terminals, thereby enhancing the competitiveness relative to other alternative technologies. For example, in logistics or warehousing scenarios, in order to facilitate the management of a large number of circulating items, an Internet of Things terminal can be attached to each item, so that the precise management of the whole process and cycle of logistics can be completed through the communication between the terminal and the logistics network. These scenarios require the competitive price of IoT terminals.

Therefore, in order to cover the IoT communication requirements which are not met, ultra-low-cost, extremely small-size, battery-free or maintenance-free IoT requires to be developed in cellular networks, and the zero-power IoT can meet this requirement.

Based on the discussion of Ambient IoT application scenarios in the 3GPP, the Ambient IoT can be used for at least the following four types of scenarios:
(1) Object identification, such as logistics, production line product management and supply chain management;
(2) Environmental monitoring, such as temperature, humidity and harmful gas monitoring of operation environment and natural environment;
(3) Positioning, such as indoor positioning, intelligent object finding, production line item positioning, etc;
(4) Intelligent control, such as intelligent control (turning on and off air conditioners and adjusting temperature) of various electrical appliances in smart homes, intelligent control (automatic irrigation and fertilization) of various facilities in agricultural greenhouses.

The 3GPP has discussed and approved a research project for the A-IoT, which includes at least the following two types of A-IoT devices.

The first type of A-IoT device: ~1 uW peak power consumption, the A-IoT device has an energy storage, an initial sampling frequency offset of 10^{x} ppm, no uplink and downlink power amplifiers, and transmits uplink transmission by backscattering an external carrier. Exemplarily, X ranges from 4 to 5, i.e. [4, 5].

The second type of A-IoT device: a peak power consumption less than a few hundred uW, the A-IoT device has an energy storage, an initial sampling frequency offset of 10^{x} ppm, may be configured with an uplink and/or downlink power amplifier, and can generate uplink transmission, i.e. active transmission, in the internal of the A-IoT device, or transmit uplink transmission by backscattering of an external carrier. Exemplarily, X ranges from 4 to 5, i.e. [4, 5].

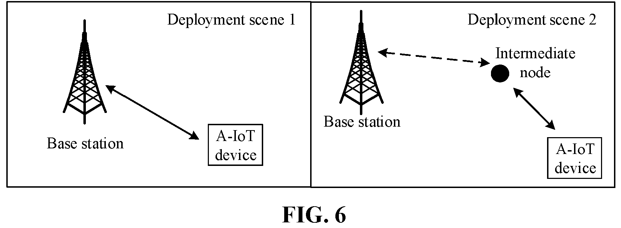

The A-IoT mainly considers the following two deployment scenarios/topologies, corresponding to Figure 6:
(1) BS ↔ Ambient IoT device, the base station performs bidirectional signaling and/or data communication with the A-IoT device. Here, the base station transmitting to the A-IoT device and the base station receiving from the A-IoT may be two different base stations.
(2) BS ↔ intermediate node ↔ Ambient IoT device, the A-IoT device performs bidirectional communication with an intermediate node that can transfer signaling and/or data between the BS and the A-IoT device. In the SID discussion stage, the intermediate node is determined as a UE under network control, and the intermediate node is located indoors.

At present, two kinds of services are mainly considered in the A-IoT research project, one is Device-terminated (DT) and the other is Device-Originated-Device-Terminated triggered (DO-DTT). DT mainly refers to the A-IoT terminal performing specific actions through downlink commands, such as issuing a command "turn on the air conditioner" to the A-IoT device in a smart home scenario, and the A-IoT device performs corresponding operations. The DO-DTT mainly refers to the A-IoT device reporting information through downlink command triggering. The typical scenarios are warehouse counting or sensor sensing, such as triggering, through trigger information, several zero-power labels to report ID or report sensor data.

Considering that the number of A-IoT devices in the above scenarios may be large, especially under DO-DTT service, the warehoused goods are all pasted with zero-power labels. How to report information and avoid conflicts between these large numbers of zero-power labels is a problem that needs to be solved. The initial access (RACH) mechanism in NR UU can be used as the basis, among which two-step RACH and four-step RACH can be considered.

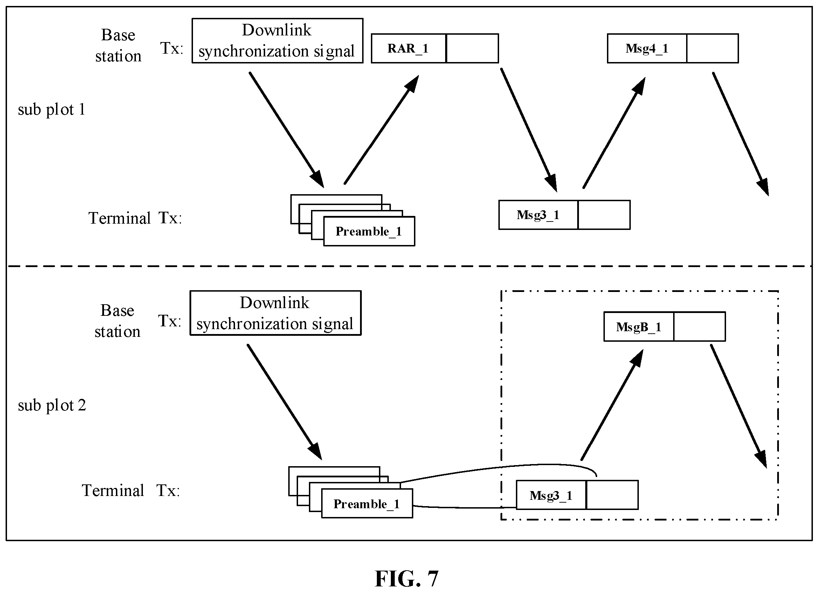

For example, FIG. 7 is a schematic diagram of a 4-step RACH and a 2-step RACH in the conventional NR UU. The primary purpose of the initial access is to make the base station aware of the presence of the terminal, assign a Cell-Radio Network Temporary Identifier (C-RNTI) or other identifier to the terminal, and perform uplink synchronization between the base station and the terminal.

In sub plot FIG. 1 of FIG. 7, the base station first transmits a downlink Synchronization Signal, for example, a Synchronization Signal/PBCH Block (SSB), and the terminal performs downlink Synchronization by searching for the downlink Synchronization Signal, and acquires some configuration information, for example, resources for transmitting a Preamble, and the like. After that, the terminal selects and sends the preamble sequence to the base station. The preamble sequence can also be called message 1. Generally, different terminals select different preamble sequences when performing initial access, but different terminals may happen to select the same preamble sequence, that is, there is a conflict, which requires signaling interaction of message 3 and 4 to resolve this conflict. It is assumed that Terminal 1 and Terminal 2 select the same preamble_1 (shown as the shadow diagonal lines). After receiving message 1, the base station feeds back a random-access response (RAR), that is, message 2. The RAR includes a timing advance amount for the terminal to perform subsequent uplink transmission, allocates a Temporary Cell RNTI (TC-RNTI) to the terminal, and indicates a transmission resource of message 3 to the terminal. It should be noted that if the preamble sequence selected by the terminal 1 and the terminal 2 is identical (i.e., preamble_1), the identical RAR messages (RAR_1) corresponding to the same TC-RNTI are received, and both terminals 1 and 2 transmit the messages 3 on the same resource (Msg3_1) based on the instruction of the RARs, and carry the respective ID information in the messages 3. If the base station only successfully receives the message 3 of the terminal 1 or 2, for example, the base station successfully receives the message 3 of the terminal 1, the message 3 sent by the terminal 1 is truncated to 48 bits and sent as message 4 (i.e., Msg4_1). After the receiving the message 4, the terminal 1 compares that the message 3 sent by the terminal 1 matches with the message 4 fed back by the base station, and validate the TC-RNTI acquired by the terminal 1 in the RAR message (i.e., RAR_1), as the C-RNTI for the subsequent scheduling of the terminal 1. The terminal 1 completes the random access procedure, and the terminal 2 finds that the message 4 fed back by the base station does not match the message 3 of the terminal 2, and needs to perform initial access. If the base station successfully receives the messages 3 of Terminal 1 and Terminal 2 at the same time, the message 3 of one of Terminals 1 and 2 is truncated to 48 bits for feedback, in order to ensure the uniqueness of C-RNTI in the cell, for example, only the truncated information bits of message 3 of Terminal 1 are fed back, and Terminal 2 needs to perform random access again. It can be understood that if there is no collision, the terminal selects the preamble and then acquires a unique C-RNTI through 4-step RACH.

In sub plot FIG. 2 of FIG. 7, the base station first transmits a downlink synchronization signal similarly, for example, an SSB, and the terminal performs downlink synchronization by searching for the downlink synchronization signal, and acquires some configuration information, for example, resources for transmitting a Preamble, and the like. The difference from the 4-step RACH is that there is an association relationship between the resource of the Preamble and the resource of the Message 3, and this association relationship is determined according to the configuration information carried by the downlink synchronization signal. Therefore, when the terminal randomly selects the Preamble, the terminal may directly acquire a transmission resource position of the Message 3, and the terminal sends the Preamble sequence and the Message 3, and the Preamble sequence and the Message 3 are collectively referred to as Message A. If the terminals 1 and 2 happen to select the same Preamble_1 when randomly selecting the Preamble sequence, the terminals 1 and 2 transmit the messages 3, which contains the respective IDs of the terminals 1 and 2, on the same resource Msg_3, respectively. If the base station successfully receives only the message A of the terminal 1 or the terminal 2, for example, the message A of the terminal 1, the message 3 sent by the terminal 1 is truncated to 48 bits and sent as a part of the message B (i.e., MsgB_1). After the terminal 1 receives the message B, the terminal 1 compares that the message 3 sent by the terminal 1 matches the message B fed back by the base station, and the terminal 1 implements the random access procedure, and the message B also carries information such as C-RNTI and timing advance amount allocated to the terminal 1. The terminal 2 finds that the message B fed back by the base station does not match the message 3 of the terminal 2, and needs to perform random access. If the base station successfully receives messages A from Terminal 1 and Terminal 2 at the same time, the message 3 of one of Terminal 1 and Terminal 2 is truncatedto 48 bits, in order to ensure the uniqueness of C-RNTI in the cell, as part of message B for feedback, for example, only the truncated information bits of message 3 of Terminal 1 are fed back, and Terminal 2 needs to perform random access again. It can be understood that if there is no collision, the terminal also acquires a unique C-RNTI, a timing advance amount and other information through the two-step RACH after selecting the preamble.

As can be learned from the background part, when the A-IoT device performs uplink transmission, for example, reporting identification information in a warehouse counting scene, the A-IoT uplink data transmission can be performed through Message 3 or Message A by referring to the above-described 4-step or 2-step RACH process. However, at present, in the initial access, the base station may truncate only the Message 3 of one of the terminals (which select the same preamble) having a collision to 48 bits for feedback in order to ensure the uniqueness of the C-RNTI. In this way, even if multiple A-IoT devices report with the same time-frequency resource in the A-IoT scenario, and the base station successfully receives the uplink data of the multiple A-IoT devices, the base station can only determine and feed back, according to the existing RACH mechanism, that uplink transmission of one of the A-IoT devices is successful, which will cause the A-IoT device that has successfully transmitted the uplink data to retransmit again.

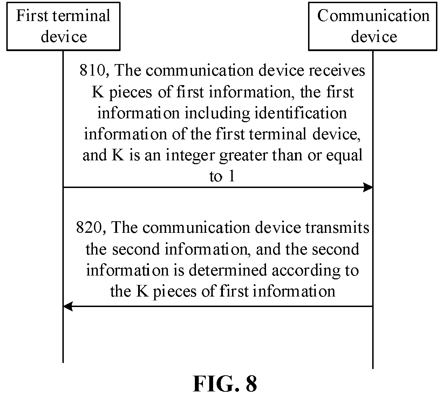

Referring to FIG. 8, which is a flowchart of an information transmission method according to an embodiment of the present disclosure, the method can be applied to the network architecture shown in FIGS. 1 and 6. The method may include at least one of the following operations 810-820.

At 810, the communication device receives K pieces of first information, and the first information includes identification information of a first terminal device, and K is an integer greater than or equal to 1.

For any one of the first terminal devices, the first terminal device sends first information including identification information of the first terminal device. The identification information of the first terminal device is used to distinguish different first terminal devices, and different first terminal devices have different identification information.

In some embodiments, the first terminal device is an A-IoT device, and may be, for example, an A-IoT tag. In some embodiments, the communication device is a network device or a second terminal device. The network device may be a base station and the second terminal device may be an intermediate node.

For example, for a deployment scenario: BS↔Ambient IoT device shown in FIG. 6, the first terminal device is the A-IoT device, and the communication device is the base station.

For example, for a deployment scenario: BS ↔ intermediate node ↔ Ambient IoT device shown in FIG. 6, the first terminal device is the A-IoT device, and the communication device is an intermediate node. In some embodiments, the intermediate node may relay signaling and/or data between the base station and the A-IoT device. For example, the intermediate node is a UE under network control, and optionally, the intermediate node is located indoors.

In some embodiments, it is assumed that N first terminal devices send pieces of first information, the first information sent by each first terminal device includes identification information of the first terminal device, and N is an integer greater than or equal to 1. Since the first information transmitted by the first terminal device may or may not be successfully received by the communication device, it is assumed that K pieces of first information are successfully received by the communication device. It should be understood that K is greater than or equal to 0, and K is less than or equal to N. K= 0 indicates that none of the N pieces of first information has been successfully received by the communication device. K=N indicates that the N pieces of first information are successfully received by the communication device. N>K>0 indicates that some of the N pieces of first information is successfully received by the communication device, and some of the N pieces of first information is not successfully received by the communication device.

In some embodiments, the communication device receives K pieces of first information on a first resource. In some embodiments, the first resource is a time-frequency resource. In some embodiments, the first resource is M code domain resources corresponding to one time-frequency resource, and M is an integer greater than or equal to 1.

Exemplarily, the N first terminal devices send pieces of first information to the communication device on the same time-frequency resource, and each piece of first information includes identification information of the first terminal device that transmits the first information. Accordingly, the communication device receives K pieces of first information on the same time-frequency resource, K being an integer greater than or equal to 1 and less than or equal to N. Further, the time-frequency resource is determined according to a time-domain resource position and a frequency-domain resource position. The time domain resource position refers to a resource position allocated in time, and the frequency domain resource position refers to a resource position allocated in frequency. Here, the division granularity of the time domain resource may be a frame, a subframe, a slot, a sub-slot, a symbol, a group of symbols, or the like. The division granularity of the frequency domain resource may be an RB (Resource Block), an RB group, a subcarrier, or the like. It should be understood that when N first terminal devices send pieces of first information to the communication device on the same time-frequency resource, resource collision and interference occur, and the first information transmitted by each of the N first terminal devices may or may not be successfully received by the communication device. Therefore, the communication device may receive K pieces of first information on the same time-frequency resource, K is greater than or equal to 0, and K is less than or equal to N.

Exemplarily, the N first terminal devices transmit pieces of first information over M code domain resources on the same time-frequency resource, and each piece of first information includes identification information of the first terminal device that transmits the first information. When M=1, the N first terminal devices send the pieces of first information to the communication device through the same code domain resource on the same time-frequency resource. When M=N, the N first terminal devices send the pieces of first information to the communication device through different code domain resources on the same time-frequency resource. When M<N, the N first terminal devices send the pieces of first information to the communication device through M code domain resources on the same time-frequency resource. It can be understood that since M is smaller than N, multiple first terminal devices send the pieces of first information using the same code domain resource. When multiple first terminal devices send the pieces of first information using the same code domain resource, resource conflict and interference will occur, and the first information transmitted by each of the N first terminal devices may be successfully received by the communication device or may not be successfully received by the communication device. Therefore, K pieces of first information received by the communication device on the same time-frequency resource, K is greater than or equal to 0, and K is less than or equal to N. In addition, the code domain resource may be a code domain sequence. Exemplarily, the code domain sequence is a bit sequence, a random sequence, a pseudo-random sequence, an M sequence, a gold sequence, a ZC sequence, or the like. Exemplarily, there is orthogonality between different code domain sequences.

In some embodiments, the N first terminal devices correspond to the same access sequence or scrambling sequence. The communication device successfully receives K pieces of first information, and the K first terminal devices that transmit the K pieces of first information correspond to the same access sequence or scrambling sequence.

In some embodiments, the N first terminal devices that send the first information using the same time-frequency resource correspond to the same access sequence or scrambling sequence. For a communication device that successfully receives K pieces of first information, K first terminal devices that transmit the K pieces of first information using the same time-frequency resource correspond to the same access sequence or scrambling sequence.

In some embodiments, at least two first terminal devices that send the first information using the same code domain resource correspond to the same access sequence or scrambling sequence. The first terminal devices corresponding to at least two pieces of first information received by the communication device on the same code domain resource corresponds to the same access sequence or scrambling sequence.

In some embodiments, the access sequence is used when the first terminal device accesses the communication device. For example, the access sequence may be a preamble sequence used in a random access procedure, or other sequence having the same or similar function as the preamble sequence, which is not limited in the present disclosure.

In some embodiments, the scrambling sequence is used when information is sent to the first terminal device. For example, the scrambling sequence may be a TC-RNTI used in a random access procedure, or other sequence having the same or similar function as the TC-RNTI, which is not limited in the present disclosure.

In some embodiments, the modulation mode of the first information is any of the following: On Off Keying (OOK), Amplitude-Shift Keying (ASK), Phase-Shift Keying (PSK), and Frequency-Shift Keying (FSK).

In some embodiments, the first information is sent by backscattering and active transmission.

In some embodiments, the time-frequency resource is a Physical Uplink Control Channel (PUCCH) and/or Physical Uplink Shared Channel (PUSCH) resources.

At 820, the communication device sends second information which is determined according to the K pieces of first information.

Accordingly, the first terminal device receives the second information, and the second information is determined from the K pieces of first information.

In some embodiments, the second information includes information bits of K pieces of the first information. For example, information bits of K pieces of the first information are connected to constitute the second information.

In some embodiments, the second information includes truncated information bits of K pieces of the first information. For example, each of the K pieces of first information is truncated to X bits, and the truncated bits of the K pieces of the first information are connected to form the second information. For example, X is 4, 8, 12, 16, 20, 24, or 48, which is not limited in the present disclosure.

In some embodiments, since the K pieces of first information are transmitted by K first terminal devices, each piece of first information includes identification information of the first terminal device that transmits the first information, for example, each piece of first information includes identification information of one first terminal device that transmits the first information. The second information may be determined according to the identification information of the K first terminal devices.

In some embodiments, the second information includes K pieces of identification information of the first terminal devices. For example, the second information includes identification information of the first terminal device among the K pieces of first information.

In some embodiments, the second information includes K pieces of truncated identification information of the first terminal devices. For example, the identification information of the first terminal device in each piece of the first information is truncated to Y bits, and Y is 4, 8, 12, 16, 20, 24, or 48, which is not limited in the present disclosure.

In some embodiments, the second information is scrambled by a first sequence. In some embodiments, the first sequence may be an RNTI, or may be a sequence for scrambling in other forms except the RNTI, which is not limited in the present disclosure.

In some embodiments, the first sequence is determined according to time-frequency resources corresponding to K pieces of first information. For example, the first sequence is calculated based on time domain resource positions and/or frequency domain resource positions of the time-frequency resources corresponding to K pieces of first information.

In some embodiments, the first sequence is determined according to code domain resources corresponding to K pieces of first information. For example, the first sequence is calculated from code domain sequences corresponding to K pieces of first information.

In some embodiments, the first sequence is determined according to the access sequence or scrambling sequence corresponding to the K pieces of first information. For example, the first sequence is calculated from a preamble sequence or a TC-RNTI corresponding to K pieces of first information.

In some embodiments, the communication device sends the second information on the second resource, and the number of pieces of second information is 1. In some embodiments, the second resource is a time-frequency resource, or the second resource is a code domain resource. It will be appreciated that when K =0, the communication device does not transmit the second information. For example, the time-frequency resource for transmitting the second information is a Physical Downlink Control Channel (PDCCH), a Physical Downlink Shared Channel (PDSCH), a PUSCH or a PUCCH resource.

In some embodiments, a modulation mode of the second information is any one of the OOK, ASK, PSK, FSK.

In some embodiments, the second information is sent using any one of the following signaling: Medium Access Control Control Element (MAC CE), Radio Resource Control (RRC) signaling, Downlink Control Information (DCI), and Ambient Control Information (ACI).

In some embodiments, the second information has a fixed length, or the second information has a variable length.

According to the technical scheme provided by the embodiment of the present disclosure, after receiving K pieces of first information sent by K first terminal devices, the communication device determines second information according to the K pieces of first information and sends the second information, and when K is greater than 1, the communication device can confirm the pieces of identification information reported by multiple first terminal devices at one time, thereby avoiding the first terminal device from repeatedly reporting the identification information.

In the A-IoT application scenario, the mechanism designed in this solution enables the base station or intermediate node to confirm the identification information reported by multiple A-IoT devices using the same time-frequency resource or code domain resource at one time, thereby avoiding the A-IoT devices from repeatedly reporting the identification information.

In addition, the above embodiment only describes the technical solution provided by the present disclosure from the perspective of interaction between the first terminal device and the communication device. The above-described operations performed by the first terminal device may be separately implemented as an information transmission method on the first terminal device side. The above-described operations performed by the communication device may be separately implemented as an information transmission method on the communication device side.

Hereinafter, the technical solution of the present dislosure is described with reference to several embodiments.

Embodiment 1: N A-IoT devices send pieces of first information on the same time-frequency resource, and code division is not performed on the time-frequency resource, and the base station feeds back to the N A-IoT devices.

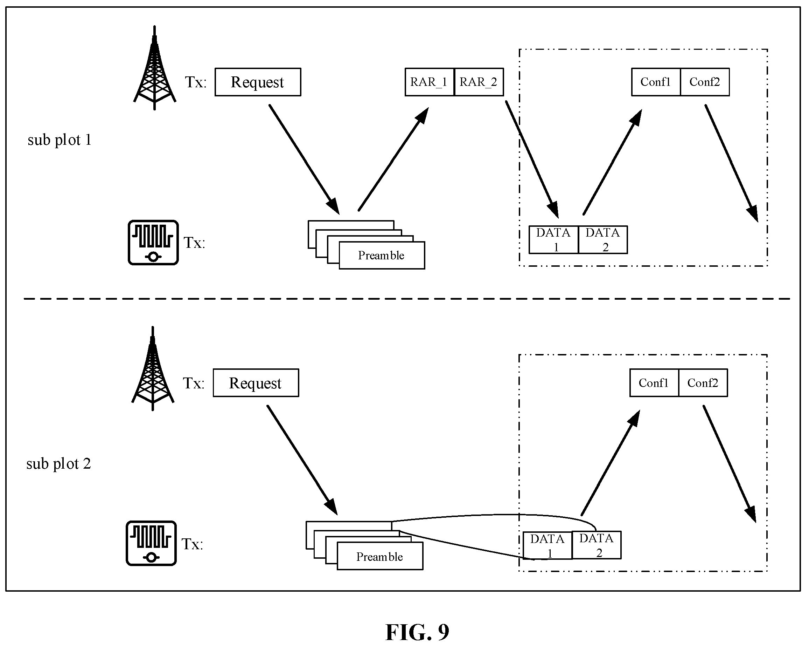

As shown in FIG. 9, the inventory service in the A-IoT is implemented by a mechanism similar to initial access. The deployment scenario 1 shown in FIG. 6 is taken as an example in FIG. 9. If the deployment scenario 2 is used, the base station can be replaced with the intermediate node.

In sub plot 1 of FIG. 9, the base station sends a request to a tag, assuming that there are six tags, that is, tags 1-6. After receiving the request, tags 1-6 select and send preamble sequences to the base station, tags 1-2 select the preamble sequence 1 (denoted by the diagonal line shadow), and tags 3-6 select the preamble sequence 2 (denoted by the horizontal line shadow). The base station transmits an initial access response RAR1 to tags 1-2 based on the preamble sequence 1. Since a scrambling sequence of RAR1 is calculated according to the preamble sequence 1 or a resource corresponding to the preamble sequence 1, only tags 1-2 can decode RAR1. The initial access response RAR1 indicates the TC-RNTI used by tags 1-2 and corresponding time-frequency resource DATA_1. Similarly, the base station sends an initial access response RAR2 to tags 3-6 based on the preamble sequence 2, and the RAR2 indicates the TC-RNTI used by tags 3-6 and the corresponding time-frequency resource DATA_2.

As shown in the dashed box in sub plot FIG. 1 of FIG. 9, tags 1-2 (i.e., N=2) send respective pieces of first information on the time-frequency resource DATA 1, which include the respective pieces of identification information of tags 1-2. For example, the time-frequency resource DATA_1 is a PUSCH or PUCCH resource. Assuming that the base station successfully receives the pieces (i.e. K=2) of first information from tags 1-2, the base station transmits second information on a time-frequency resource Conf1. Exemplarily, the time-frequency resource Conf1 is a PDSCH or PDCCH resource.

The second information is scrambled according to the first RNTI. Optionally, the first RNTI is generated according to a time domain and/or frequency domain position of DATA_1. Optionally, the first RNTI is generated according to the preamble sequence corresponding to the tags 1-2 or the TC-RNTI allocated by the base station for the tags 1-2. Thus, tags 1-2 may decode the second information.

Optionally, the second information includes the number of information bits of the pieces of first information transmitted by the tags 1-2, and for example, the number of information bits of the first information transmitted by the tags 1-2 is connected to form the second information. Optionally, the second information includes the number of truncated information bits of the pieces of first information sent by the tags 1-2. For example, the first information sent by the tags 1-2 is truncated and connected as the second information. For any one of the tags 1-2, after receiving the second information, the tag may compare the first information sent with the first information fed back by the base station or the truncated first information, and if the first information matches the first information fed back by the base station or the truncated first information, it means that the base station successfully receives the identification reported by the tag, and the inventory is successful. If there is no match, the first information needs to be retransmitted for reporting the tag identification.

Optionally, the second information includes tag identifications in the first information sent by the tags 1-2, that is, the identifications of the tags 1-2. Optionally, the second information includes truncated tag identifications in the pieces of first information sent by the tags 1-2, that is, a truncated identification of each tag in the tags 1-2. For any one of the tags 1-2, after receiving the second information, the tag may compare the tag identification with the tag identification fed back by the base station or the truncated tag identification, and if the tag identification matches the tag identification fed back by the base station or the truncated tag identification, it means that the base station successfully receives the identification reported by the tag, and the inventory is successful. If there is no match, the first information needs to be retransmitted for reporting tag identification.

As shown by the dashed box in sub plot FIG. 1 of FIG. 9, the tags 3-6 (i.e., N =4) send the respective pieces of first information on the time-frequency resource DATA_2, which include he respective pieces of identification information of the tags 3-6. For example, the time-frequency resource DATA_2 is a PUSCH or PUCCH resource. Assuming that the base station successfully receives the pieces (i.e. K=3) of first information of tags 3-5, the base station sends the second information on the time-frequency resource Conf2.

The second information is scrambled according to the first RNTI. Optionally, the first RNTI is generated according to the time domain and/or frequency domain position of DATA_2. Optionally, the first RNTI is generated according to the preamble sequences corresponding to the tags 3-6 or the TC-RNTI allocated by the base station for the tags 3-6. It can be understood that the preamble sequences or the TC-RNTI are also the preamble sequences or TC-RNTI corresponding to tags 3-5. Thus, tags 3-6 may decode the second information.

Optionally, the second information includes the number of information bits of the pieces of first information transmitted by the tags 3-5, and for example, the number of information bits of the pieces of first information sent by the tags 3-5 are connected as the second information. Optionally, the second information includes the number of truncated information bits of the pieces of first information sent by the tags 3-5, for example, the pieces of first information sent by the tags 3-5 isare truncated and connected as the second information. For any one of the tags 3-6, after receiving the second information, the tag may compare the first information sent with the first information fed back by the base station or the truncated first information. If the first information sent matches the first information fed back by the base station or the truncated first information, it means that the base station successfully receives the tag identification reported by the tag, and the inventory is successful. If there is no match, the first information needs to be retransmitted for reporting tag identification.

Optionally, the second information includes tag identifications in the pieces of first information sent by the tags 3-5, that is, the identifications of the tags 3-5. Optionally, the second information includes truncated tag identifications in the pieces of first information sent by the tags 3-5, that is, a truncated identifications of each tag of the tags 3-5. For any one of the tags 3-6, after receiving the second information, the tag may compare the tag identification with the tag identification fed back by the base station or the truncated tag identification. If the tag identification matches the tag identification fed back by the base station or the truncated tag identification, it means that the base station successfully receives the identification reported by the tag, and the inventory is successful. If there is no match, the first information needs to be retransmitted for reporting tag identification.

In sub plot 2 of FIG. 9, the base station transmits a request to a tag, assuming that there are 6 tags, i.e., tags 1-6. After receiving the request, the tags 1-2 select and send a preamble sequence 1 (denoted by the diagonal line shadow) to the base station, and since the preamble sequence 1 is associated with the time-frequency resource DATA_1, the tags 1-2 send the respective pieces (i.e., N=2) of first information on the time-frequency resource DATA_1 as indicated by the dashed box in sub plot 2 of FIG. 9. The respective pieces of first information transmitted by the tags 1-2 include the respective identification information of the tags 1-2. For example, the time-frequency resource DATA_1 is a PUSCH or PUCCH resource.

Assuming that the base station successfully receives the pieces (i.e. K=2) of first information of tags 1-2, the base station sends the second information on the time-frequency resource Conf1. Exemplarily, the time-frequency resource Conf1 is a PDSCH or PDCCH resource.

The second information is scrambled according to the first RNTI. Optionally, the first RNTI is generated according to a time domain and/or frequency domain position of DATA_1. Optionally, the first RNTI is generated according to the preamble sequence corresponding to the tags 1-2. Thus, tags 1-2 may decode the second information.

Optionally, the second information includes the number of information bits of the pieces of first information transmitted by the tags 1-2, and for example, the number of information bits of the first information transmitted by the tags 1-2 is connected to form the second information. Optionally, the second information includes the number of truncated information bits of the pieces of first information sent by the tags 1-2. For example, the first information sent by the tags 1-2 is truncated and connected as the second information. For any one of the tags 1-2, after receiving the second information, the tag may compare the first information sent with the first information fed back by the base station or the truncated first information, and if the first information matches the first information fed back by the base station or the truncated first information, it means that the base station successfully receives the identification reported by the tag, and the inventory is successful. If there is no match, the first information needs to be retransmitted for reporting the tag identification.

Optionally, the second information includes tag identifications in the first information sent by the tags 1-2, that is, the identifications of the tags 1-2. Optionally, the second information includes truncated tag identifications in the pieces of first information sent by the tags 1-2, that is, a truncated identification of each tag in the tags 1-2. For any one of the tags 1-2, after receiving the second information, the tag may compare the tag identification with the tag identification fed back by the base station or the truncated tag identification, and if the tag identification matches the tag identification fed back by the base station or the truncated tag identification, it means that the base station successfully receives the identification reported by the tag, and the inventory is successful. If there is no match, the first information needs to be retransmitted for reporting tag identification.

When the base station transmits a request to the tag, the tags 3-6 select the preamble sequence 2 (denoted by a horizontal line shadow) and transmits the preamble sequence 2 to the base station after receiving the request. Since the preamble sequence 2 is associated with the time-frequency resource DATA_2, the tags 3-6 transmit the respective pieces (i.e., N=4) of first information on the time-frequency resource DATA_2 as shown by the dashed box in sub plot 2 of FIG. 9. The respective pieces of first information transmitted by the tags 3-6 includes the respective pieces of identification information of the tags 3-6. For example, the time-frequency resource DATA_2 is a PUSCH or PUCCH resource.

Assuming that the base station successfully receives the pieces (i.e. K=3) of first information of tags 3-5, the base station transmits the second information on the time-frequency resource Conf2.

The second information is scrambled according to the first RNTI. Optionally, the first RNTI is generated according to the time domain and/or frequency domain position of DATA_2. Optionally, the first RNTI is generated according to the preamble sequences corresponding to the tags 3-6. It can be understood that the preamble sequences are also the preamble sequences corresponding to tags 3-5 since only the preamble sequences of tags 3-5 are received by the base station. Thus, tags 3-6 may decode the second information.

Optionally, the second information includes the number of information bits of the pieces of first information transmitted by the tags 3-5, and for example, the number of information bits of the pieces of first information sent by the tags 3-5 are connected as the second information. Optionally, the second information includes the number of truncated information bits of the pieces of first information sent by the tags 3-5, for example, the pieces of first information sent by the tags 3-5 are truncated and connected as the second information. For any one of the tags 3-6, after receiving the second information, the tag may compare the first information sent with the first information fed back by the base station or the truncated first information. If the first information sent matches the first information fed back by the base station or the truncated first information, it means that the base station successfully receives the tag identification reported by the tag, and the inventory is successful. If there is no match, the first information needs to be retransmitted for reporting tag identification.

Optionally, the second information includes tag identifications in the pieces of first information sent by the tags 3-5, that is, the identifications of the tags 3-5. Optionally, the second information includes truncated tag identifications in the pieces of first information sent by the tags 3-5, that is, a truncated identifications of each tag of the tags 3-5. For any one of the tags 3-6, after receiving the second information, the tag may compare the tag identification with the tag identification fed back by the base station or the truncated tag identification. If the tag identification matches the tag identification fed back by the base station or the truncated tag identification, it means that the base station successfully receives the identification reported by the tag, and the inventory is successful. If there is no match, the first information needs to be retransmitted for reporting tag identification.

Embodiment 2: N A-IoT devices transmit pieces of first information on the same code domain resource on the same time-frequency resource, and the base station feeds back to the N A-IoT devices.

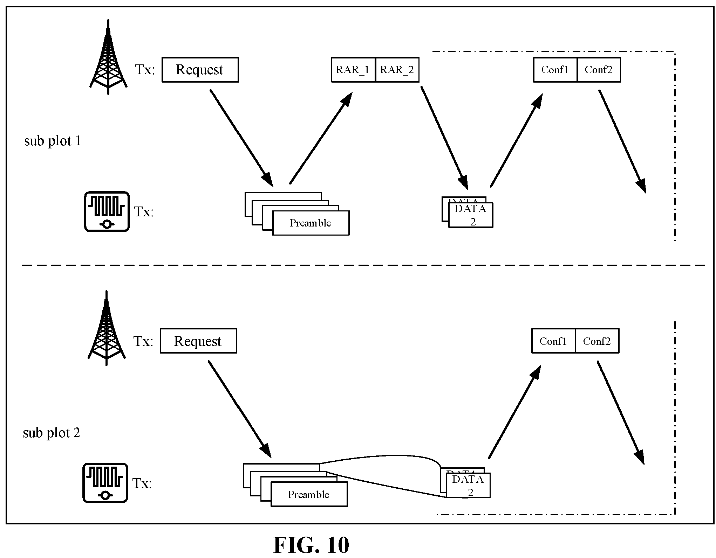

As shown in FIG. 10, the inventory service in A-IoT is implemented by a mechanism similar to initial access. The deployment scenario 1 shown in FIG. 6 is taken as an example in FIG. 9. If the deployment scenario 2 is used, the base station can be replaced with the intermediate node.

In sub plot FIG. 1 of FIG. 10, the base station sends a request to a tag, assuming that there are six tags, that is, tags 1-6. After receiving the request, tags 1-6 select and send preamble sequences to the base station, tags 1-2 select the preamble sequence 1 (denoted by the diagonal line shadow), and tags 3-6 select the preamble sequence 2 (denoted by the horizontal line shadow). The base station transmits an initial access response RAR1 to tags 1-2 based on the preamble sequence 1. Since a scrambling sequence of RAR1 is calculated according to the preamble sequence 1 or a resource corresponding to the preamble sequence 1, only tags 1-2 can decode RAR1. The initial access response RAR1 indicates the TC-RNTI used by tags 1-2 and corresponding code-domain resource DATA_1. Similarly, the base station sends an initial access response RAR2 to tags 3-6 based on the preamble sequence 2, and the RAR2 indicates the TC-RNTI used by tags 3-6 and the corresponding code-domain resource DATA_2. That is, the resources DATA 1 and DATA 2 have a Code Division Multiplexing (CDM) relationship, and the Code domain resources DATA_1 and DATA_2 may correspond to the same time-frequency resource or may be located in different time-frequency resources.

As shown in the dashed box in sub plot FIG. 1 of FIG. 10, tags 1-2 (i.e., N=2) send respective pieces of first information with the same sequence on the code-domain resource DATA 1, which include the respective pieces of identification information of tags 1-2. For example, the code-domain resource DATA_1 is a PUSCH or PUCCH resource. Assuming that the base station successfully receives the pieces (i.e. K=2) of first information from tags 1-2, the base station transmits second information on a time-frequency resource Conf1. Exemplarily, the time-frequency resource Conf1 is a PDSCH or PDCCH resource.

The second information is scrambled according to the first RNTI. Optionally, the first RNTI is generated according to at least one of a time domain position, a frequency domain position or a code-domain sequence of DATA_1. Optionally, the first RNTI is generated according to the preamble sequence corresponding to the tags 1-2 or the TC-RNTI allocated by the base station for the tags 1-2. Thus, tags 1-2 may decode the second information.

Optionally, the second information includes the number of information bits of the pieces of first information transmitted by the tags 1-2, and for example, the number of information bits of the first information transmitted by the tags 1-2 are connected to form the second information. Optionally, the second information includes the number of truncated information bits of the pieces of first information sent by the tags 1-2. For example, the first information sent by the tags 1-2 are truncated and connected as the second information. For any one of the tags 1-2, after receiving the second information, the tag may compare the first information sent with the first information fed back by the base station or the truncated first information, and if the first information matches the first information fed back by the base station or the truncated first information, it means that the base station successfully receives the identification reported by the tag, and the inventory is successful. If there is no match, the first information needs to be retransmitted for reporting the tag identification.

Optionally, the second information includes tag identifications in the first information sent by the tags 1-2, that is, the identifications of the tags 1-2. Optionally, the second information includes truncated tag identifications in the pieces of first information sent by the tags 1-2, that is, a truncated identification of each tag in the tags 1-2. For any one of the tags 1-2, after receiving the second information, the tag may compare the tag identification with the tag identification fed back by the base station or the truncated tag identification, and if the tag identification matches the tag identification fed back by the base station or the truncated tag identification, it means that the base station successfully receives the identification reported by the tag, and the inventory is successful. If there is no match, the first information needs to be retransmitted for reporting tag identification.

As shown by the dashed box in sub plot FIG. 1 of FIG. 10, the tags 3-6 (i.e., N =4) send the respective pieces of first information by the same sequence on the code-domain resource DATA_2, which include he respective pieces of identification information of the tags 3-6. For example, the code-domain resource DATA_2 is a PUSCH or PUCCH resource. Assuming that the base station successfully receives the pieces (i.e. K=3) of first information of tags 3-5, the base station sends the second information on the time-frequency resource Conf2.

The second information is scrambled according to the first RNTI. Optionally, the first RNTI is generated according to at least one of the time domain position, the frequency domain position or the code-domain sequence of DATA_2. Optionally, the first RNTI is generated according to the preamble sequences corresponding to the tags 3-6 or the TC-RNTI allocated by the base station for the tags 3-5. It can be understood that the preamble sequences or the TC-RNTI are also the preamble sequences or the TC-RNTI corresponding to tags 3-5. Thus, tags 3-6 may decode the second information.

Optionally, the second information includes the number of information bits of the pieces of first information transmitted by the tags 3-5, and for example, the number of information bits of the pieces of first information sent by the tags 3-5 are connected as the second information. Optionally, the second information includes the number of truncated information bits of the pieces of first information sent by the tags 3-5, for example, the pieces of first information sent by the tags 3-5 isare truncated and connected as the second information. For any one of the tags 3-6, after receiving the second information, the tag may compare the first information sent with the first information fed back by the base station or the truncated first information. If the first information sent matches the first information fed back by the base station or the truncated first information, it means that the base station successfully receives the tag identification reported by the tag, and the inventory is successful. If there is no match, the first information needs to be retransmitted for reporting tag identification.

Optionally, the second information includes tag identifications in the pieces of first information sent by the tags 3-5, that is, the identifications of the tags 3-5. Optionally, the second information includes truncated tag identifications in the pieces of first information sent by the tags 3-5, that is, a truncated identifications of each tag of the tags 3-5. For any one of the tags 3-6, after receiving the second information, the tag may compare the tag identification with the tag identification fed back by the base station or the truncated tag identification. If the tag identification matches the tag identification fed back by the base station or the truncated tag identification, it means that the base station successfully receives the identification reported by the tag, and the inventory is successful. If there is no match, the first information needs to be retransmitted for reporting tag identification.

In sub plot 2 of FIG. 10, the base station transmits a request to a tag, assuming that there are 6 tags, i.e., tags 1-6. After receiving the request, the tags 1-2 select and send a preamble sequence 1 (denoted by the diagonal line shadow) to the base station, and since the preamble sequence 1 is associated with the code-domain resource DATA_1, the tags 1-2 send the respective pieces (i.e., N=2) of first information with the same sequence on the code-domain resource DATA_1 as indicated by the dashed box in sub plot 2 of FIG. 10. The respective pieces of first information transmitted by the tags 1-2 include the respective identification information of the tags 1-2. For example, the code-domain resource DATA_1 is a PUSCH or PUCCH resource.

Assuming that the base station successfully receives the pieces (i.e. K=2) of first information of tags 1-2, the base station sends the second information on the time-frequency resource Conf1. Exemplarily, the time-frequency resource Conf1 is a PDSCH or PDCCH resource.

The second information is scrambled according to the first RNTI. Optionally, the first RNTI is generated according to at least one of a time domain position, a frequency domain position or a code-domain sequence of DATA_1. Optionally, the first RNTI is generated according to the preamble sequence corresponding to the tags 1-2. Thus, tags 1-2 may decode the second information.

Optionally, the second information includes the number of information bits of the pieces of first information transmitted by the tags 1-2, and for example, the number of information bits of the pieces of first information transmitted by the tags 1-2 are connected to form the second information. Optionally, the second information includes the number of truncated information bits of the pieces of first information sent by the tags 1-2. For example, the first information sent by the tags 1-2 is truncated and connected as the second information. For any one of the tags 1-2, after receiving the second information, the tag may compare the first information sent with the first information fed back by the base station or the truncated first information, and if the first information matches the first information fed back by the base station or the truncated first information, it means that the base station successfully receives the identification reported by the tag, and the inventory is successful. If there is no match, the first information needs to be retransmitted for reporting the tag identification.

Optionally, the second information includes tag identifications in the first information sent by the tags 1-2, that is, the identifications of the tags 1-2. Optionally, the second information includes truncated tag identifications in the pieces of first information sent by the tags 1-2, that is, a truncated identification of each tag in the tags 1-2. For any one of the tags 1-2, after receiving the second information, the tag may compare the tag identification with the tag identification fed back by the base station or the truncated tag identification, and if the tag identification matches the tag identification fed back by the base station or the truncated tag identification, it means that the base station successfully receives the identification reported by the tag, and the inventory is successful. If there is no match, the first information needs to be retransmitted for reporting tag identification.

When the base station transmits a request to the tag, the tags 3-6 select the preamble sequence 2 (denoted by a horizontal line shadow) and transmits the preamble sequence 2 to the base station after receiving the request. Since the preamble sequence 2 is associated with the code-domain resource DATA_2, the tags 3-6 transmit the respective pieces of first information with the same sequence on the code-domain resource DATA_2 as shown by the dashed box in sub plot 2 of FIG. 10. The respective pieces of first information transmitted by the tags 3-6 includes the respective pieces of identification information of the tags 3-6. For example, the code-domain resource DATA_2 is a PUSCH or PUCCH resource. It should be noted that the code-domain resources DATA_1 and DATA_2 may correspond to the same time-frequency resource, and may located different time-frequency resources.

Assuming that the base station successfully receives the pieces (i.e. K=3) of first information of tags 3-5, the base station transmits the second information on the time-frequency resource Conf2.

The second information is scrambled according to the first RNTI. Optionally, the first RNTI is generated according to at least one of the time domain position, the frequency domain position or the code-domain sequence of DATA_2. Optionally, the first RNTI is generated according to the preamble sequences corresponding to the tags 3-6. It can be understood that the preamble sequences are also the preamble sequences corresponding to tags 3-5 since only the preamble sequences of tags 3-5 are received by the base station. Thus, tags 3-6 may decode the second information.

Optionally, the second information includes the number of information bits of the pieces of first information transmitted by the tags 3-5, and for example, the number of information bits of the pieces of first information sent by the tags 3-5 are connected as the second information. Optionally, the second information includes the number of truncated information bits of the pieces of first information sent by the tags 3-5, for example, the pieces of first information sent by the tags 3-5 are truncated and connected as the second information. For any one of the tags 3-6, after receiving the second information, the tag may compare the first information sent with the first information fed back by the base station or the truncated first information. If the first information sent matches the first information fed back by the base station or the truncated first information, it means that the base station successfully receives the tag identification reported by the tag, and the inventory is successful. If there is no match, the first information needs to be retransmitted for reporting tag identification.

Optionally, the second information includes tag identifications in the pieces of first information sent by the tags 3-5, that is, the identifications of the tags 3-5. Optionally, the second information includes truncated tag identifications in the pieces of first information sent by the tags 3-5, that is, a truncated identifications of each tag of the tags 3-5. For any one of the tags 3-6, after receiving the second information, the tag may compare the tag identification with the tag identification fed back by the base station or the truncated tag identification. If the tag identification matches the tag identification fed back by the base station or the truncated tag identification, it means that the base station successfully receives the identification reported by the tag, and the inventory is successful. If there is no match, the first information needs to be retransmitted for reporting tag identification.

Embodiment 3: N A-IoT devices transmit pieces of first information on M code domain resources on the same time-frequency resource, and the base station feeds back to the N A-IoT devices.

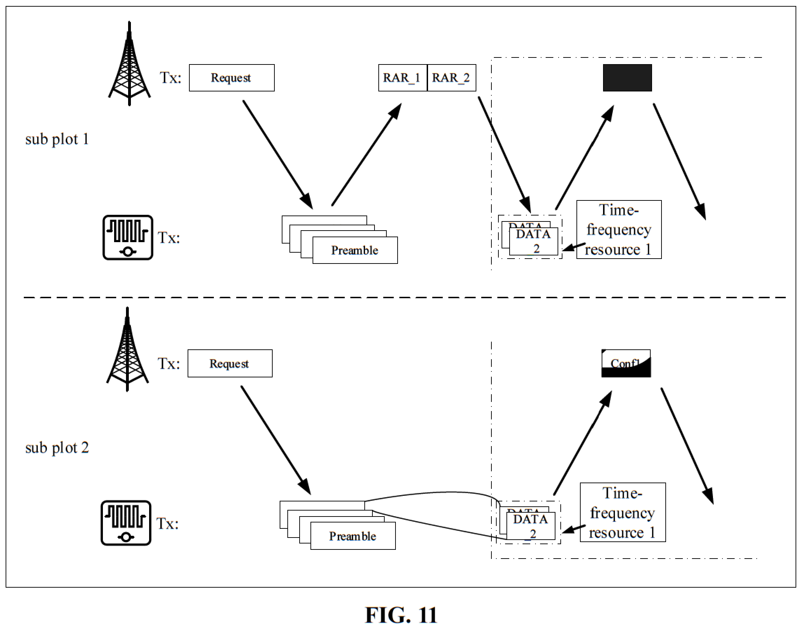

As shown in FIG. 11, the inventory service in the A-IoT is implemented by a mechanism similar to initial access. The deployment scenario 1 shown in FIG. 6 is taken as an example in FIG. 11. If the deployment scenario 2 is used, the base station can be replaced with the intermediate node.

In sub plot FIG. 1 of FIG. 11, the base station sends a request to a tag, assuming that there are six tags, that is, tags 1-6. After receiving the request, tags 1-6 select and send preamble sequences to the base station, tags 1-2 select the preamble sequence 1 (denoted by the diagonal line shadow), and tags 3-6 select the preamble sequence 2 (denoted by the horizontal line shadow). The base station transmits an initial access response RAR1 to tags 1-2 based on the preamble sequence 1. Since a scrambling sequence of RAR1 is calculated according to the preamble sequence 1 or a resource corresponding to the preamble sequence 1, only tags 1-2 can decode RAR1. The initial access response RAR1 indicates the TC-RNTI used by tags 1-2 and corresponding code-domain resource DATA_1. Similarly, the base station sends an initial access response RAR2 to tags 3-6 based on the preamble sequence 2, and the RAR2 indicates the TC-RNTI used by tags 3-6 and the corresponding code-domain resource DATA_2. That is, the resources DATA 1 and DATA 2 have a Code Division Multiplexing (CDM) relationship, and the Code domain resources DATA_1 and DATA_2 may correspond to the same time-frequency resource 1.

As shown in the dashed box in sub plot FIG. 1 of FIG. 11, tags 1-2 send respective pieces of first information with the same sequence on the code-domain resource DATA 1 in the time-frequency resource 1, which include the respective pieces of identification information of tags 1-2. Tags 3-6 send respective pieces of first information with the same sequence on the code-domain resource DATA 2 in the time-frequency resource 1, which include the respective pieces of identification information of tags 3-6. N=6 in the embodiment. For example, the code-domain resource DATA_1 is a PUSCH or PUCCH resource. For example, the code-domain resource DATA_2 is a PUSCH or PUCCH resource Assuming that the base station successfully receives the pieces (i.e. K=5) of first information from tags 1-5, the base station transmits second information on a time-frequency resource Conf1. Exemplarily, the time-frequency resource Conf1 is a PDSCH or PDCCH resource.

The second information is scrambled according to the first RNTI. Optionally, the first RNTI is generated according to a time domain position and/or a frequency domain position of the time-frequency resource 1. Thus, tags 1-6 may decode the second information.

Optionally, the second information includes the number of information bits of the pieces of first information transmitted by the tags 1-5, and for example, the number of information bits of the first information transmitted by the tags 1-5 are connected to form the second information. Optionally, the second information includes the number of truncated information bits of the pieces of first information sent by the tags 1-5. For example, the first information sent by the tags 1-5 are truncated and connected as the second information. For any one of the tags 1-6, after receiving the second information, the tag may compare the first information sent with the first information fed back by the base station or the truncated first information, and if the first information matches the first information fed back by the base station or the truncated first information, it means that the base station successfully receives the identification reported by the tag, and the inventory is successful. If there is no match, the first information needs to be retransmitted for reporting the tag identification.

Optionally, the second information includes tag identifications in the first information sent by the tags 1-5, that is, the identifications of the tags 1-5. Optionally, the second information includes truncated tag identifications in the pieces of first information sent by the tags 1-5, that is, a truncated identification of each tag in the tags 1-5. For any one of the tags 1-6, after receiving the second information, the tag may compare the tag identification with the tag identification fed back by the base station or the truncated tag identification, and if the tag identification matches the tag identification fed back by the base station or the truncated tag identification, it means that the base station successfully receives the identification reported by the tag, and the inventory is successful. If there is no match, the first information needs to be retransmitted for reporting tag identification.

In sub plot 2 of FIG. 11, the base station transmits a request to a tag, assuming that there are 6 tags, i.e., tags 1-6. After receiving the request, the tags 1-2 select and send a preamble sequence 1 (denoted by the diagonal line shadow) to the base station, and since the preamble sequence 1 is associated with the code-domain resource DATA_1, the tags 1-2 send the respective pieces (i.e., N=2) of first information with the same sequence on the code-domain resource DATA_1 as indicated by the dashed box in sub plot 2 of FIG. 11. The respective pieces of first information transmitted by the tags 1-2 include the respective identification information of the tags 1-2. For example, the code-domain resource DATA_1 is a PUSCH or PUCCH resource. The tags 3-6 select the preamble sequence 2 (denoted by a horizontal line shadow) and transmits the preamble sequence 2 to the base station after receiving the request. Since the preamble sequence 2 is associated with the code-domain resource DATA_2, the tags 3-6 transmit the respective pieces of first information with the same sequence on the code-domain resource DATA_2 as shown by the dashed box in sub plot 2 of FIG. 11. The respective pieces of first information transmitted by the tags 3-6 includes the respective pieces of identification information of the tags 3-6. For example, the code-domain resource DATA_2 is a PUSCH or PUCCH resource. It should be noted that the code-domain resources DATA_1 and DATA_2 are located the same time-frequency resource 1. N=6 in this embodiment.

Assuming that the base station successfully receives the pieces of (i.e. K =5) first information of tags 1-5, the base station transmits the second information on the time-frequency resource Conf1. Exemplarily, the time-frequency resource Conf1 is a PDSCH or PDCCH resource.

The second information is scrambled according to the first RNTI. Optionally, the first RNTI is generated according to the time domain position and/or the frequency domain position of the time-frequency resource 1. Thus, tags 1-6 may decode the second information.

Optionally, the second information includes the number of information bits of the pieces of first information transmitted by the tags 1-5, and for example, the number of information bits of the pieces of first information sent by the tags 1-5 are connected as the second information. Optionally, the second information includes the number of truncated information bits of the pieces of first information sent by the tags 1-5, for example, the pieces of first information sent by the tags 1-5 are truncated and connected as the second information. For any one of the tags 1-6, after receiving the second information, the tag may compare the first information sent with the first information fed back by the base station or the truncated first information. If the first information sent matches the first information fed back by the base station or the truncated first information, it means that the base station successfully receives the tag identification reported by the tag, and the inventory is successful. If there is no match, the first information needs to be retransmitted for reporting tag identification.

Optionally, the second information includes tag identifications in the pieces of first information sent by the tags 1-5, that is, the identifications of the tags 1-5. Optionally, the second information includes truncated tag identifications in the pieces of first information sent by the tags 1-5, that is, a truncated identifications of each tag of the tags 1-5. For any one of the tags 1-6, after receiving the second information, the tag may compare the tag identification with the tag identification fed back by the base station or the truncated tag identification. If the tag identification matches the tag identification fed back by the base station or the truncated tag identification, it means that the base station successfully receives the identification reported by the tag, and the inventory is successful. If there is no match, the first information needs to be retransmitted for reporting tag identification.

The device embodiment of the of the present disclosure is described below, which can be used to perform the method embodiment of the present disclosure. For details not disclosed in the device embodiments of the present disclosure, please refer to the method embodiments of the present disclosure.

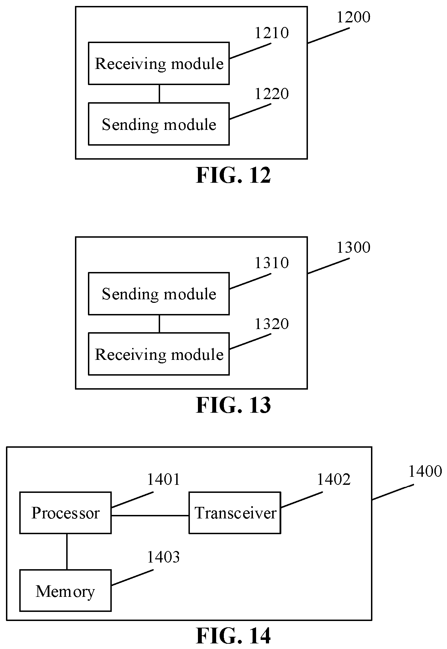

Referring to FIG. 12, which is a block diagram of an information transmission device according to an embodiment of the present disclosure is shown, the device has a function of realizing the information transmission method on the communication device side, and the function may be realized by hardware, or may be realized by hardware executing corresponding software. The device may be the above-described communication device or may be provided in the communication device. As shown in FIG. 12, the device 1200 may include a receiving module 1210 and a sending module 1220.

The receiving module 1210 is configured to receive K pieces of first information. Tthe first information including identification information of the first terminal device, and K is an integer greater than or equal to 1.

The sending module 1220 is configured to send second information. The second information is determined according to the K pieces of first information.

In some embodiments, the second information is determined from the K pieces of first information, which includes that: the second information includes information bits of the K pieces of first information; or the second information includes truncated information bits of the K first information.

In some embodiments, the K pieces of first information are transmitted by K first terminal devices, and each piece of of the first information includes identification information of the first terminal device that sends the first information; The second information is determined according to the K pieces of first information, which includes that the second information is determined according to the identification information of the K first terminal devices.

In some embodiments, the second information is determined according to the identification information of the K first terminal devices, which includes that: the second information includes the identification information of the K first terminal devices; or the second information includes truncated identification information of the K first terminal devices.

In some embodiments, the second information is scrambled by a first sequence. The first sequence is determined according to a time-frequency resource corresponding to the K pieces of first information. Alternatively, the first sequence is determined according to a code domain resource corresponding to the K pieces of first information. Alternatively, the first sequence is determined according to an access sequence or a scrambling sequence corresponding to the K pieces of first information.

In some embodiments, the receiving module 1210 is configured to receive the K pieces of first information on a first resource. The first resource is a time-frequency resource, or the first resource is M code domain resources corresponding to a time-frequency resource, and M is an integer greater than or equal to 1.

In some embodiments, the K first terminal devices that send the K pieces of first information correspond to the same access sequence or scrambling sequence. Alternatively, at least two first terminal devices that transmit the first information using the same code domain resource correspond to the same access sequence or scrambling sequence.

In some embodiments, the sending module 1220 is configured to transmit the second information on a second resource, and the second resource is a time-frequency resource, or the second resource is a code domain resource.

In some embodiments, the modulation manner of the first information or the second information is any of the following: OOK, ASK, PSK, FSK.

In some embodiments, the first information is transmitted in any one of backscattering and active transmission.

In some embodiments, the second information is transmitted using any of the following signaling: MAC CE, RRC signaling, DCI, ACI.

In some embodiments, the second information has a fixed length, or the second information has a variable length.

In some embodiments, the communication device is a network device or a second terminal device.

Referring to FIG. 13, which is a block diagram of an information transmission device according to another embodiment of the present disclosure is shown. The device has a function of realizing the information transmission method on the first terminal device side, and the function may be realized by hardware, or may be realized by hardware executing corresponding software. The device may be the first terminal device described above, or may be provided in the first terminal device. As shown in FIG. 13, the device 1300 may include a sending module 1310 and a receiving module 1320.

The sending module 1310 is configured to send first information including identification information of the first terminal device.

The receiving module 1320 is configured to receive second information determined according to K pieces of first information, and K is an integer greater than or equal to 1.

In some embodiments, the second information is determined from the K pieces of first information, which includes that: the second information includes information bits of the K pieces of first information; or, the second information includes truncated information bits by the K pieces of first information.

In some embodiments, the K pieces of first information are transmitted by K first terminal devices, and each piece of of the first information includes identification information of the first terminal device that sends the first information; The second information is determined according to the K pieces of first information, which includes that the second information is determined according to the identification information of the K first terminal devices.

In some embodiments, the second information is determined according to the identification information of the K first terminal devices, which includes that: the second information includes the identification information of the K first terminal devices; or the second information includes truncated identification information of the K first terminal devices.

In some embodiments, the second information is scrambled by a first sequence. The first sequence is determined according to a time-frequency resource corresponding to the K pieces of first information. Alternatively, the first sequence is determined according to a code domain resource corresponding to the K pieces of first information. Alternatively, the first sequence is determined according to an access sequence or a scrambling sequence corresponding to the K pieces of first information.

In some embodiments, the sending module 1310 is configured to send the first information on a first resource. The first resource is a time-frequency resource, or the first resource is a code domain resource.

In some embodiments, the K first terminal devices that send the K pieces of first information correspond to the same access sequence or scrambling sequence. Alternatively, at least two first terminal devices that transmit the first information using the same code domain resource correspond to the same access sequence or scrambling sequence.

In some embodiments, the receiving module 1320 is configured to receive the second information on a second resource. The second resource is a time-frequency resource, or the second resource is a code domain resource.

In some embodiments, the modulation manner of the first information or the second information is any of the following: OOK, ASK, PSK, FSK.

In some embodiments, the first information is transmitted in any one of backscattering and active transmission.

In some embodiments, the second information is transmitted using any of the following signaling: MAC CE, RRC signaling, DCI, ACI.

In some embodiments, the second information has a fixed length, or the second information has a variable length.

It should be noted that when the device provided in the above-described embodiment realizes its function, only the division of the above-described function modules is used as an example, and in practical application, the above-described functions can be allocated to and implemented by different function modules according to actual needs, that is, the content structure of the device can be divided into different function modules to implement all or part of the above-described functions.

The specific manner in which various modules in the device in the above-described embodiment performs operations has been described in detail in the method embodiment, and will not be described in detail here. For details not described in detail in the device embodiments, reference may be made to the method embodiments described above.

Referring to FIG. 14, which is a schematic structural diagram of a communication device according to an embodiment of the present disclosure is shown, the communication device may be a terminal device or a network device described above. The communication device 1400 may include at least one of a processor 1401, a transceiver 1402, and a memory 1403. The processor 1401 is configured to implement various processing functions of the communication device 1400, such as generating information to be transmitted, processing received information, controlling transmission and/or reception, and the like. The transceiver 1402 is used to implement the functions of transmitting and/or receiving, such as the functions of the sending module and/or the receiving module described above.

The processor 1401 includes one or more processing cores, and executes various functional applications and information processing by running software programs and modules.

The transceiver 1402 may include a receiver and a sender, for example, the receiver and the sender may be implemented as the same wireless communication component, which may include a wireless communication chip and a radio frequency antenna.

The memory 1403 may be coupled to the processor 1401 and the transceiver 1402.

The memory 1403 may be used to store a computer program executed by a processor, and the processor 1401 is used to execute the computer program to implement various steps in the method embodiments described above.

In some embodiments, the communication device 1400 is the communication device described in the above embodiment, and the transceiver 1402 is configured to: receive K pieces of first information including identification information of the first terminal device, and K is an integer greater than or equal to 1; and send second information, the second information being determined from the K pieces of first information.

In some embodiments, the communication device 1400 is the first terminal device in the above embodiment, and the transceiver 1402 is configured to: send first information including identification information of the first terminal device; and receive second information, the second information being determined from K pieces of first information, K being an integer greater than or equal to 1.

For details not described in detail in the embodiment, refer to the above embodiment, and will not be described in detail here.

Furthermore, the memory may be implemented by any type of volatile or non-volatile storage device or a combination thereof. The volatile or non-volatile storage device includes, but not limited to, a magnetic or optical disk, an electrically erasable programmable read-only memory, an erasable programmable read-only memory, a static random access memory, a read-only memory, a magnetic memory, a flash memory, a programmable read-only memory.

The embodiment of the present disclosure further provides a computer-readable storage medium having a computer program stored thereon. The computer program, when executed by a processor, implements the information transmission method on the communication device side or the information transmission method on the first terminal device side. In some embodiments, the computer-readable storage medium may include a ROM, a RAM, a Solid State Drive (SSD), an optical disk, or the like. The Random Access Memory may include a Resistance Random Access Memory (ReRAM) and a Dynamic Random Access Memory (DRAM).

The embodiment of the present disclosure further provides a chip including a programmable logic circuit and/or a program instruction, and when the chip is running, the information transmission method on the communication device side or the information transmission method on the first terminal device side is implemented.

An embodiment of the present disclosure further provides a computer program product. The computer program product includes a computer instruction, the computer instruction is stored in a computer readable storage medium, and a processor reads and executes the computer instruction from the computer readable storage medium to implement the information transmission method on the communication device side or the information transmission method on the first terminal device side.

It should be understood that the "indication" mentioned in the embodiments of the present disclosure may be a direct indication, an indirect indication, or an indication that there is an association relationship. By way of example, A indicating B may mean that A directly indicates B, e.g., B may be acquired by A; or may also indicate that A indirectly indicates B, for example, A indicates C, and B can be acquired by C; or may also indicate that there is an association relationship between A and B.

In the description of the embodiment of the present disclosure, the term "correspondence" may mean that there is a direct correspondence or an indirect correspondence between the two objects, or may mean that there is a correlation between the two objects, or may be a relationship between instruction and being instructed, configuration and being configured, or the like.

In some embodiments of the present disclosure, the term "predefined" may be implemented by storing corresponding codes, tables, or other means that can be used to indicate relevant information in advance in devices (for example, including terminal devices and network devices), and the specific implementation manner is not limited in the present disclosure. For example, "predefined" may refer to defining in the protocol.

In some embodiments of the present disclosure, the "protocol" may refer to a standard protocol in the communication field, and may include, for example, a BLE protocol, a Wi-Fi protocol, and related protocols applied to future communication systems, which is not limited in the present disclosure.

The "multiple" herein refers to two or more. The "and/or" describes an association relationship of associated objects, and indicates that there may be three kinds of relationships, for example, A and/or B and may indicate that A exists alone, A and B exist simultaneously, and B exists alone. The character "/" generally indicates that the associated objects before and after are in an "or" relationship.

The "greater than or equal to" herein may mean greater than or equal to or greater than, and the "less than or equal to" may mean less than or equal to or less than.

In addition, the numbers of the operations described herein only illustrates one possible sequence of execution between the operations, and in some other embodiments, the above-described operations may not be executed in the sequence of numbers. For example, two different numbered operations are executed simultaneously, or two different numbered operations are executed in the reverse order as illustrated, which is not limited in the embodiment of the present disclosure.

Those skilled in the art will recognize that in one or more of the examples described above, the functions described in the embodiments of the present disclosure may be implemented in hardware, software, firmware, or any combination thereof. When implemented using software, these functions may be stored in a computer-readable medium or transmitted as one or more instructions or code on the computer-readable medium. The computer-readable medium includes a computer storage medium and a communication medium. The communication medium includes any medium that facilitates transferring a computer program from one place to another place. The storage medium may be any available medium accessible by a general-purpose or special-purpose computer.

The foregoing are only exemplary embodiments of the present disclosure, and are not intended to limit the present disclosure. Any modifications, equivalent substitutions, improvements, etc. made within the spirit and principles of the present disclosure should be included in the scope of protection of the present disclosure.

## Claims

1. An information transmission method performed by a communication device, comprising:
receiving K pieces of first information, the first information comprising identification information of a first terminal device, K being an integer greater than or equal to 1; and
sending second information, the second information being determined according to the K pieces of first information.

2. The method of claim 1, wherein the second information being determined according to the K pieces of first information comprises:
the second information comprising information bits of the K pieces of first information; or,
the second information comprising truncated information bits of the K pieces of first information.

3. The method of claim 1, wherein the K pieces of first information are transmitted by K first terminal devices, each piece of the first information comprising identification information of the first terminal device that transmits the first information; and
the second information being determined according to the K pieces of first information comprises: the second information being determined according to the identification information of the K first terminal devices.

4. The method of claim 3, wherein the second information being determined according to the identification information of the K first terminal devices comprises:
the second information comprising identification information of the K first terminal devices; or,
the second information comprising truncated identification information of the K first terminal devices.

5. The method of any one of claims 1 to 4, wherein the second information is scrambled by a first sequence,
the first sequence is determined according to a time-frequency resource corresponding to the K pieces of first information; or,
the first sequence is determined according to a code domain resource corresponding to the K pieces of first information; or,
the first sequence is determined according to an access sequence or a scrambling sequence corresponding to the K pieces of first information.

6. The method of any one of claims 1 to 5, wherein the receiving K pieces of first information comprises:
receiving K pieces of first information on a first resource, wherein the first resource is a time-frequency resource, or the first resource is M code domain resources corresponding to a time-frequency resource, M being an integer greater than or equal to 1.

7. The method of any one of claims 1 to 6, wherein
K first terminal devices that send the K pieces of first information correspond to the same access sequence or scrambling sequence; or,
at least two first terminal devices that send the pieces of first information using the same code domain resource correspond to the same access sequence or scrambling sequence.

8. The method of any one of claims 1 to 7, wherein the sending the second information comprises:
sending the second information on a second resource, wherein the second resource is a time-frequency resource, or the second resource is a code domain resource.

9. The method of any one of claims 1 to 8, wherein a modulation mode of the first information or the second information is any one of on-off keying (OOK), amplitude-shift keying (ASK), phase-shift keying (PSK), or frequency-shift keying (FSK).

10. The method of any one of claims 1 to 9, wherein the first information is sent in any one of: backscattering or active transmission.

11. The method of any one of claims 1 to 10, wherein the second information is sent using any one of media access layer control element (MAC CE), radio resource control (RRC) signaling, downlink control information (DCI), environment control information (ACI).

12. The method of any one of claims 1 to 11, wherein the second information has a fixed length or the second information has a variable length.

13. The method of any one of claims 1 to 12, wherein the communication device is a network device or a second terminal device.

14. An information transmission method performed by a first terminal device, comprising:
sending first information, the first information comprising identification information of the first terminal device; and
receiving second information, the second information being determined from K pieces of first information, K being an integer greater than or equal to 1.

15. The method of claim 14, wherein the second information being determined according to the K pieces of first information comprises:
the second information comprising information bits of the K pieces of first information; or,
the second information comprising truncated information bits of the K pieces of first information.

16. The method of claim 14, wherein the K pieces of first information are transmitted by K first terminal devices, each piece of the first information comprising identification information of the first terminal device that transmits the first information; and
the second information being determined according to the K pieces of first information comprises: the second information being determined according to the identification information of the K first terminal devices.

17. The method of claim 16, wherein the second information being determined according to the identification information of the K first terminal devices comprises:
the second information comprising identification information of the K first terminal devices; or,
the second information comprising truncated identification information of the K first terminal devices.

18. The method of any one of claims 14 to 17, wherein the second information is scrambled by a first sequence;
the first sequence is determined according to a time-frequency resource corresponding to the K pieces of first information; or,
the first sequence is determined according to a code domain resource corresponding to the K pieces of first information; or,
the first sequence is determined according to an access sequence or a scrambling sequence corresponding to the K pieces of first information.

19. The method of any one of claims 14 to 18, wherein the sending the first information comprises:
sending the first information on a first resource, wherein the first resource is a time-frequency resource, or the first resource is a code domain resource.

20. The method of any one of claims 14 to 19, wherein
K first terminal devices that send the K pieces of first information correspond to the same access sequence or scrambling sequence; or,
at least two first terminal devices that send the pieces of first information using the same code domain resource correspond to the same access sequence or scrambling sequence.

21. The method of any one of claims 14 to 20, wherein the receiving the second information comprises:
receiving the second information on a second resource, wherein the second resource is a time-frequency resource or the second resource is a code domain resource.

22. The method of any one of claims 14 to 21, wherein a modulation mode of the first information or the second information is any one of on-off keying (OOK), amplitude-shift keying (ASK), phase-shift keying (PSK), or frequency-shift keying (FSK).

23. The method of any one of claims 14 to 22, wherein the first information is sent in any one of: backscattering or active transmission.

24. The method of any one of claims 14 to 23, wherein the second information is sent using any one of media access layer control element (MAC CE), radio resource control (RRC) signaling, downlink control information (DCI), environment control information (ACI).

25. The method of any one of claims 14 to 24, wherein the second information has a fixed length or the second information has a variable length.

26. An information transmission device, comprising:
a receiving module configured to receive K pieces of first information, the first information comprising identification information of the first terminal device, K being an integer greater than or equal to 1; and
a sending module configured to send second information, the second information being determined according to the K pieces of first information.

27. An information transmission device, comprising:
a sending module configured to send first information, the first information comprising identification information of the first terminal device; and
a receiving module configured to receive second information, the second information being determined from K pieces of first information, K being an integer greater than or equal to 1.

28. A communication device comprising a processor, and a memory having a computer program stored thereon, which, when executed by the processor, implements the method of any one of claims 1 to 13.

29. A terminal device comprising a processor, and a memory having a computer program stored thereon, which, when executed by the processor, implements the method of any one of claims 14 to 25.

30. A computer-readable storage medium having a computer program stored thereon, whic, when executed by a processor, implements the method of any one of claims 1 to 13, or the method of any one of claims 14 to 25.

31. A chip comprising a programmable logic circuit and/or program instructions, wherein the chip, when running, implements the method of any one of claims 1 to 13, or the method of any one of claims 14 to 25.

32. A computer program product comprising computer instructions stored in a computer-readable storage medium, wherein a processor reads and executes the computer instructions from the computer-readable storage medium to implement the method of any one of claims 1 to 13, or the method of any one of claims 14 to 25.
